# EUROPÄISCHE PATENTSCHRIFT

(11) **EP 2 915 973 B1**
(45) Veröffentlichungstag und Bekanntmachung des Hinweises auf die Patenterteilung: **05.10.2016**
(21) Anmeldenummer: 14197855.1
(22) Anmeldetag: 15.12.2014
(51) Int. Cl.: F16L 13/02, F16L 21/06, F01N 13/18

(54) **Trichter-Rohr-Anordnung**
Funnel-pipe arrangement
Agencement trémie-tube

(30) Priorität: 26.02.2014 DE 102014203496
(43) Veröffentlichungstag der Anmeldung: 09.09.2015
(73) Patentinhaber: Eberspächer Exhaust Technology GmbH & Co. KG, 66539 Neunkirchen (DE)
(72) Erfinder: Kast, Peter, 73732 Esslingen (DE)
(74) Vertreter: BRP Renaud & Partner mbB Rechtsanwälte Patentanwälte Steuerberater

(56) Entgegenhaltungen:
- FR-A1- 2 138 326
- US-A- 3 990 859
- US-A1- 2008 277 016

## Beschreibung

Die vorliegende Erfindung betrifft eine Anordnung eines Rohrs an einem Trichter sowie ein Verfahren zum Herstellen einer derartigen Anordnung. Schließlich betrifft die vorliegende Erfindung eine Abgasanlage für eine Brennkraftmaschine, insbesondere eines Kraftfahrzeugs, die wenigstens eine derartige Anordnung aufweist, um eine Abgasnachbehandlungseinrichtung mit einem Rohrstück zu verbinden.

Bei Abgasanlagen von Brennkraftmaschinen, insbesondere in Kraftfahrzeugen, kommen vermehrt Schellenverbindungen zum Einsatz, um Abgasnachbehandlungseinrichtungen mit Rohrstücken zu verbinden. Hierdurch wird ein Austausch der Abgasnachbehandlungseinrichtungen bzw. von Komponenten davon, vereinfacht.

Üblicherweise besitzt eine Abgasnachbehandlungseinrichtung ein Gehäuse, dessen Querschnitt größer ist als der Querschnitt eines zum Gehäuse führenden Rohrstücks bzw. eines vom Gehäuse weg führenden Rohrstücks. Dementsprechend können die Gehäuse von Abgasnachbehandlungseinrichtungen üblicherweise mit einem Einlasstrichter und/oder mit einem Auslasstrichter ausgestattet sein, der einen Stutzen aufweist, über den das jeweilige Rohrstück an das Gehäuse angeschlossen ist. Um nun das Rohrstück mittels einer Schellenverbindung hinreichend fest mit dem Stutzen verbinden zu können, müssen über die Schelle relativ große Kräfte übertragen werden. Für eine zuverlässige Schellenverbindung ist es von Vorteil, wenn der Stutzen und das Rohrstück relativ zueinander zentriert bzw. ausgerichtet sind, so dass die Schellenverbindung letztlich nur die axiale Verspannung bewirken muss.

Die französische Patentanmeldung FR2138326 offenbart die Verbindung eines an einem Trichter integral ausgeformtem Stutzens mit einem Rohrstück mittels einer Schellenverbindung.

Zum Zentrieren des Stutzens relativ zum Rohrkörper ist es grundsätzlich möglich, im Bereich der Schellenverbindung ein zusätzliches Stützrohr vorzusehen, das in den Stutzen eingesteckt ist und das innerhalb der Anordnung axial in das Rohrstück hineinragt. Das Stützrohr ist an die Abmessungen des Stutzens und des Rohrstücks so abgestimmt, dass sich die gewünschte Ausrichtung bzw. Zentrierung ergibt. Ferner ist es grundsätzlich möglich, den Stutzen mit dem Stützrohr zu verschweißen und die Schellenverbindung mit dem Rohrstück am Stützrohr zu realisieren. In jedem Fall entsteht dadurch ein zusätzlicher Aufwand bei der Herstellung der Abgasnachbehandlungseinrichtung bzw. bei der Herstellung der Verbindung des Rohrstücks mit dem Gehäuse.

Die vorliegende Erfindung beschäftigt sich mit dem Problem, für eine Trichter-Rohr-Anordnung bzw. für ein zugehöriges Herstellungsverfahren bzw. für eine damit ausgestattete Abgasanlage eine verbesserte oder zumindest eine andere Ausführungsform anzugeben, die sich durch einen reduzierten Aufwand und insbesondere durch reduzierte Herstellungskosten auszeichnet.

Dieses Problem wird erfindungsgemäß durch die Gegenstände der unabhängigen Ansprüche gelöst. Vorteilhafte Ausführungsformen sind Gegenstand der abhängigen Ansprüche.

Die Erfindung beruht auf dem allgemeinen Gedanken, den Stutzen so zu formen, dass er stirnseitig, in der Umfangsrichtung verteilt wenigstens zwei separate, axial offene Aussparungen aufweist. Durch diese Aussparungen erstreckt sich der Stutzen in der Umfangsrichtung nicht mehr geschlossen, sondern segmentweise. Durch die Aussparungen wird dabei erreicht, dass die einzelnen Stutzensegmente axial in das Rohr hineinragen, wenn das Rohr auf den Stutzen aufgesteckt wird. Hierdurch bewirken die Stutzensegmente eine Ausrichtung bzw. Zentrierung des Rohrs relativ zum Stutzen. Radial außen auf den Stutzen wird eine Verbindungshülse aufgesteckt, die einen sich zum Trichter hin verjüngenden Spannkragen aufweist, der an der Verbindungshülse integral ausgeformt ist. Das Rohr weist nun seinerseits an einem Endabschnitt, der ebenfalls radial außen auf den Stutzen aufgesteckt wird, einen integral daran ausgeformten Gegenspannkragen auf, der sich vom Trichter weg verjüngt. Mit einer Schelle kann nun die Schellenverbindung hergestellt werden, wobei die Schelle einen ringförmigen Verbindungskörper besitzt, der den Spannkragen und den Gegenspannkragen umgreift und axial aufeinander zu vorspannt. Insgesamt lässt sich somit eine hinreichend feste und stabile Verbindung zwischen Rohr und Trichter realisieren, wobei auf ein vorstehend genanntes zusätzliches Stützrohr verzichtet werden kann. Die Herstellung der Anordnung wird dadurch vereinfacht und lässt sich preiswert realisieren.

Entsprechend einer vorteilhaften Ausführungsform kann der Spannkragen indirekt über eine Dichtung oder direkt am Gegenspannkragen anliegen. Hierdurch kann innerhalb der Schellenverbindung eine ausreichende Abdichtung realisiert werden.

Die Verbindungshülse kann gemäß einer vorteilhaften Ausführungsform an einer dem Rohr zugewandten Seite eine axiale Abstützfläche aufweisen, die sich Analog zum Spannkragen zum Trichter hin verjüngen kann. Insbesondere dann, wenn es sich bei der Verbindungshülse um ein Blechformteil, vorzugsweise Tiefziehteil, handelt. Zusätzlich kann der Endabschnitt des Rohrs an einer dem Trichter zugewandten Seite eine axiale Anschlagfläche aufweisen, an der sich die Abstützfläche axial abstützen kann, und zwar direkt oder indirekt, z.B. über ein Dichtungselement. Diese Bauweise schafft eine flächige Abstützung und insbesondere eine flächige Kontaktierung, was eine hinreichende Abdichtung innerhalb der Anordnung vereinfacht. Die Schelle sorgt dann für eine axiale Vorspannung, mit welcher die Abstützfläche gegen die Anschlagfläche vorgespannt ist.

Bei einer vorteilhaften Weiterbildung kann vorgesehen sein, dass der Endabschnitt des Rohrs zumindest in einem den Gegenspannkragen und die Anschlagfläche aufweisenden Bereich vergleichsweise massiv ausgestaltet ist, also beispielsweise als Gussteil oder als Drehteil. Hierdurch lassen sich relativ große axiale Verspannungen innerhalb der Anordnung realisieren, beispielsweise und hohe Haltekräfte zu erzielen. Dies ist z.B. dann von Vorteil, wenn innerhalb des Rohrs bzw, des Trichters relativ hohe Gasdrücke herrschen sollen.

Bei einer anderen Ausführungsform kann die Verbindungshülse in der Umfangsrichtung genau eine Unterbrechung aufweisen, wodurch die Verbindungshülse radial elastisch wird. Bei einer alternativen Ausführungsform ist die Verbindungshülse in der Umfangsrichtung unterbrechungsfrei, also geschlossen umlaufend ausgeführt.

Gemäß einer anderen vorteilhaften Ausführungsform kann die Verbindungshülse mit dem Stutzen verschweißt sein. Bevorzugt ist hierbei eine in der Umfangsrichtung vollständig umlaufende, geschlossene Schweißnaht, um eine hinreichende Abdichtung der Verbindungshülse gegenüber dem Stutzen zu erreichen. Die Schweißnaht ist dabei in einem sich axial an die Aussparungen anschließenden, ringförmig geschlossenen Bereich des Stutzens angeordnet.

Eine andere günstige Ausführungsform sieht vor, dass durch die Aussparungen an dem Stutzen Stutzensegmente gebildet sind, deren Erstreckung in Umfangrichtung sich vom Trichter weg verringert. Durch eine solche Gestaltung der Stutzensegmente wird das Einführen des Stutzens in das Rohr vereinfacht.

Bei einer anderen Ausführungsform kann der Stutzen durch Umformung des Trichters integral am Trichter ausgeformt sein. Hierdurch lässt sich der Stutzen besonders preiswert am Trichter realisieren.

Bei einer anderen besonders günstigen Ausführungsform kann die Trichter-Rohr-Anordnung durch das nachfolgend beschriebene Verfahren hergestellt sein. Auf die Vorteile die sich dadurch ergeben wird auf die nachfolgende Beschreibung des Verfahrens Bezug genommen.

Beim erfindungsgemäßen Verfahren wird im Trichter zunächst eine Öffnung hergestellt, die einen wenigstens zweistrahligen, sternförmigen Querschnitt besitzt. Anschließend kann der Trichter im Bereich dieser Öffnung durchgestellt werden, wodurch sich der Stutzen erzeugen lässt. Dabei erzeugen die Strahlen des mehrstrahligen sternförmigen Querschnitts innerhalb des Stutzens die axial offenen Aussparungen, was zur Segmentierung des Stutzens in der Umfangsrichtung führt. Nach dem Aufstecken der Verbindungshülse und nach dem Aufstecken des Rohrs auf den Stutzen kann die Schelle montiert werden, um das Rohr mit Hilfe der Verbindungshülse am Stutzen zu fixieren.

Vor dem Aufstecken des Rohrs kann es zweckmäßig sein, die Verbindungshülse beispielsweise mittels einer Schweißverbindung oder mittels einer Lötverbindung, am Stutzen, vorzugsweise dicht, zu befestigen.

Der Gegenspannkragen kann am Endabschnitt des Rohrs durch Auftulpen oder durch eine sonstige Umformtechnik integral ausgeformt werden.

Die Öffnung im Trichter kann gemäß einer vorteilhaften Ausführungsform so geformt sein, dass sich die Strahlen des sternförmigen Querschnitts von außen nach innen verjüngen. Dies führt dazu, dass sich die im Stutzen ausbildenden Aussparungen dann mit zunehmendem Abstand vom Trichter aufweiten. Hierdurch lassen sich Spannungen innerhalb des Stutzens, die beim elastischen Verformen der Stutzensegmente auftreten können, reduzieren.

Gemäß einer anderen vorteilhaften Ausführungsform kann der Querschnitt der Öffnung des Trichters genau drei oder vier Strahlen aufweisen, so dass er im Wesentlichen Y-förmig oder X-förmig ist. Es hat sich gezeigt, dass drei oder vier Strahlen ausreichen, um im Stutzen dann hinreichend elastische Stutzensegmente zu erzeugen.

Sofern der sternförmige Querschnitt der Öffnung des Trichters dreistrahlig oder vierstrahlig ausgestaltet ist, lässt sich in Verbindung mit den sich von außen nach innen verjüngenden Strahlen für den Querschnitt der Öffnung des Trichters insgesamt eine Kleeblattform erzeugen. Hierdurch ergeben sich in der Umfangsrichtung vergleichsweise kurze Stutzensegmente, die sich durch eine in radialer Richtung besonders hohe Federelastizität auszeichnen.

Bei einer erfindungsgemäßen Abgasanlage ist zumindest eine Abgasnachbehandlungseinrichtung vorgesehen, die ein Gehäuse aufweist, das mit wenigstens einem Trichter an der Einlassseite oder an der Auslassseite ausgestattet ist, wobei die Abgasnachbehandlungseinrichtung an ein Rohrstück bzw. an ein Rohr der Abgasanlage angeschlossen ist, wobei dieser Anschluss mit Hilfe einer Trichter-Rohr-Anordnung der vorstehend beschriebenen Art erfolgt.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen.

Es zeigen, jeweils schematisch,
- Fig. 1: einen stark vereinfachten Längsschnitt einer Abgasanlage im Bereich einer Trichter-Rohr-Anordnung,
- Fig. 2: eine stark vereinfachte Draufsicht auf einen Trichter während der Herstellung der Anordnung,
- Fig. 3: eine Schnittansicht wie in Fig. 1, jedoch während der Herstellung der Anordnung.

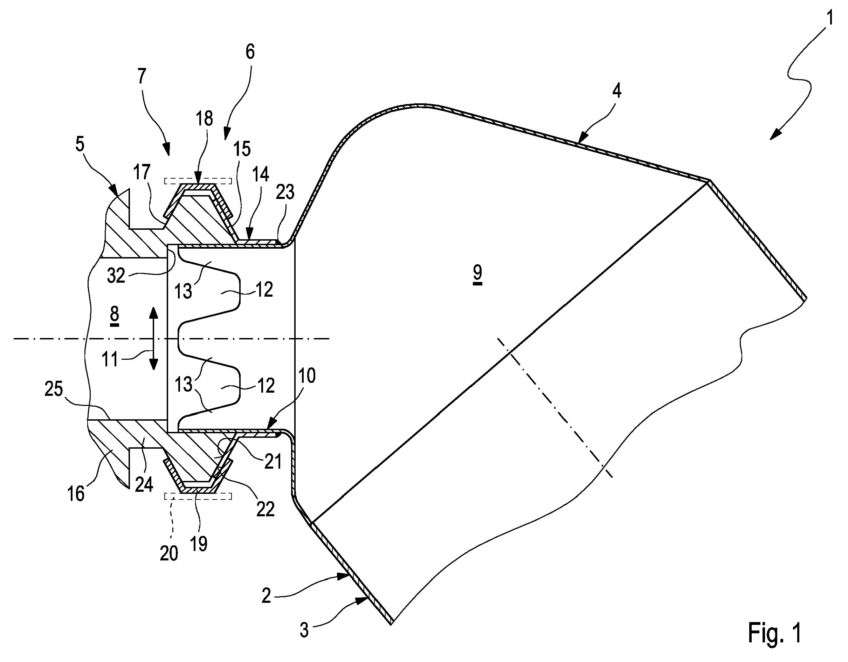

Entsprechend Figur 1 umfasst eine hier nur teilweise gezeigte Abgasanlage 1 zumindest eine Abgasnachbehandlungseinrichtung 2, die ein Gehäuse 3 besitzt, in dem je nach Behandlungsaufgabe der Abgasnachbehandlungseinrichtung 2 zumindest ein Behandlungselement angeordnet sein kann. Ein derartiges Behandlungselement kann beispielsweise ein Katalysator oder ein Partikelfilter sein. Das Gehäuse 3 ist an einem seiner axialen Enden mit einem Trichter 4 versehen, über den das Gehäuse 3 an ein Rohr 5 der Abgasanlage 1 angeschlossen ist. Dieser Anschluss ist hierbei mit einer Trichter-Rohr-Anordnung 6 realisiert, die eine Schellenverbindung 7 beinhaltet.

In Figur 1 ist nur ein axiales Ende des Gehäuses 3 erkennbar. Es ist klar, dass das andere, hier nicht gezeigte axiale Ende des Gehäuses 3 ebenfalls einen Trichter 4 aufweisen kann, der mit einem anderen Rohr 5 verbunden ist. Dabei kann grundsätzlich die gleiche Trichter-Rohr-Anordnung 6 zur Anwendung kommen, was jedoch nicht zwingend ist.

Auch kann die Abgasanlage 1 weitere Abgasnachbehandlungseinrichtungen 2 aufweisen, die jeweils ein Gehäuse 3 mit wenigstens einem Trichter 4 besitzen und mit diesem Rohr 5 oder mit einem anderen Rohr 5 verbunden sind. Dabei können wieder die gleichen Trichter-Rohr-Anordnungen 6 zu Anwendung kommen, was jedoch nicht zwingend ist.

Das Rohr 5 kann als separates Abgasrohr oder als Anschlussstutzen einer anderen Komponente der Abgasanlage 1 konzipiert sein, z.B. ein Auslassstutzen einer Turbine eines Abgasturboladers.

Die hier vorgestellte Trichter-Rohr-Anordnung 6, die im Folgenden auch kurz als Anordnung 6 bezeichnet wird, ermöglicht zum einen eine fluidische Verbindung zwischen einem Rohrinnenraum 8 und einem Trichterinnenraum 9. Zum anderen ermöglicht die Anordnung 6 eine Fixierung des Rohrs 5 am Trichter 4. Diese Fixierung erfolgt dabei mittels der Schellenverbindung 7. Die Schellenverbindung 7 befestigt somit das Rohr 5 am Trichter 4.

Am Trichter 4 ist ein Stutzen 10 integral ausgeformt. Der Stutzen 10 weist an seiner vom Trichter 4 abgewandten Stirnseite, in der Umfangsrichtung 11 verteilt, wenigstens zwei separate, axial offene Aussparungen 12 auf. Hierdurch wird der Stutzen 10 in der Umfangsrichtung 11 im Bereich der Aussparungen 12 segmentiert, so dass in diesem segmentierten Bereich entsprechend der Anzahl der Aussparungen 12 eine entsprechende Anzahl an Stutzensegmenten 13 vorhanden ist, die in der Umfangsrichtung 11 durch die Aussparungen 12 voneinander beabstandet sind.

Die Stutzensegmente 13 weisen dabei eine Erstreckung in Umfangrichtung 11 auf, die variiert. Die Erstreckung der Stutzensegmente 13 in Umfangsrichtung nimmt mit zunehmendem Abstand zum Trichter 4 ab. Die Stutzensegmente 13 sind also an den losen Enden schmaler als an den Fußenden, an denen die Stutzensegmente 13 in den nicht unterbrochenen Teil des Stutzens 10 übergehen.

Die Anordnung 6 umfasst außerdem eine Verbindungshülse 14, die radial außen auf den Stutzen 10 aufgesteckt ist und die einen Spannkragen 15 aufweist, der sich zum Trichter 4 hin verjüngt. Beispielsweise ist der Spannkragen 15 ballig, also kugelsegmentförmig geformt. Bevorzugt ist der Spannkragen 15 jedoch konisch geformt, so dass er auch als Konus bezeichnet werden kann.

Das Rohr 5 ist mit einem dem Trichter 4 zugewandten Endabschnitt 16 radial außen auf das Stutzen 10 aufgesteckt. Hierbei greifen die Stutzensegmente 13 axial in das Rohr 5 bzw. in dessen Endabschnitt 16 ein. Am Endabschnitt 16 ist ein Gegenspannkragen 17 integral ausgeformt, der sich vom Trichter 4 weg verjüngt. Beispielsweise kann der Gegenspannkragen 17 ballig, also kugelsegmentförmig ausgestaltet sein. Bevorzugt ist der Gegenspannkragen 17 jedoch konisch geformt, so dass er auch als Gegenkonus bezeichnet werden kann.

Schließlich umfasst die Schellenverbindung 7 eine Schelle 18, die einen ringförmigen Verbindungskörper 19 und eine hier nicht gezeigte Spanneinrichtung herkömmlicher Bauart umfasst. Optional kann die Schelle 18 außerdem mit einem mit unterbrochener Linie dargestellten Spannband 20 ausgestattet sein. Die vorgenannte Spanneinrichtung wirkt bevorzugt mit diesem Spannband 20 zusammen, um eine Spannkraft in Umfangsrichtung 11 in das Spannband 20 einzuleiten. Hierdurch verkürzt sich der Umfang des Spannbands 20 und somit des Verbindungskörpers 19, wodurch der Verbindungskörper 19 radial nach innen angetrieben wird. Alternativ kann die Spanneinrichtung auch direkt mit dem Verbindungskörper 19 zusammenwirken, um dessen Umfang zu reduzieren. Der Verbindungskörper 19 besitzt ein V-förmiges Profil, so dass er sowohl den Spannkragen 15 als auch den Gegenspannkragen 17 radial und axial übergreift und beim Festziehen der Schelle 18 axial aufeinander zu vorspannt.

Die Verbindungshülse 14 weist im gezeigten Beispiel an einer dem Rohr 5 zugewandten Seite des Spannkragens 15 eine Abstützfläche 21 auf. Im Beispiel ist die Verbindungshülse 14 als Tiefziehteil bzw. Blechformteil konzipiert, so dass die Abstützfläche 21 ebenfalls konisch ausgestaltet ist. Ferner ist hier vorgesehen, dass am Gegenspannkragen 17 des Rohrs 5 eine Anschlagfläche 22 vorgesehen ist, die sich an einer dem Trichter 4 zugewandten Seite befindet. Die beiden Flächen, also die Abstützfläche 21 und die Anschlagfläche 22 sind aufeinander abgestimmt, so dass sie sich aneinander axial abstützen können, und zwar entweder wie gezeigt direkt oder indirekt, wenn beispielsweise eine Dichtung axial zwischen den Flächen 21, 22 angeordnet ist.

Die Verbindungshülse 14 kann in der Umfangsrichtung 11 eine Unterbrechung aufweisen, wodurch sie radial federelastisch wird. Bevorzugt ist die Verbindungshülse 14 jedoch in der Umfangsrichtung 11 unterbrechungsfrei und geschlossen umlaufend ausgeführt und über eine entsprechende Wandstärke mit der erforderlichen Druckstabilität ausgestattet.

Die Verbindungshülse 14 kann grundsätzlich gegenüber dem Stutzen 10 abgedichtet sein. Eine entsprechende Abdichtung erfolgt dann in einem sich an die Aussparungen 12 anschließenden Bereich des Stutzens 10. Zur Abdichtung kann eine Dichtung radial zwischen der Verbindungshülse 14 und dem Stutzen 10 angeordnet sein. Ebenso ist es möglich, die Verbindungshülse 14 so am Stutzen 10 zu befestigen, dass dabei gleichzeitig eine hinreichende Abdichtung erfolgt. Denkbar ist beispielsweise eine Klebverbindung. Aufgrund der hohen Temperaturen ist jedoch eine Lötverbindung bzw. eine Schweißverbindung bevorzugt. Eine derartige Schweißverbindung kann beispielsweise in Form einer umlaufenden Naht realisiert sein, die in Figur 1 mit 23 bezeichnet ist.

Im Beispiel der Fig. 1 ist der Endabschnitt 16 des Rohrs 5 zumindest in einem den Gegenspannkragen 17 und die Anschlagfläche 22 aufweisenden Bereich 24 relativ massiv ausgestaltet, also mit einer im Vergleich zum Stutzen größeren Wandstärke ausgestattet. Beispielsweise kann dieser Bereich als Gussteil oder als Drehteil ausgestaltet sein. Insbesondere kann der gesamte Endabschnitt 16 bzw. das ganze Rohr 5 derart massiv ausgestaltet sein.

Gemäß Fig. 1 kann das Rohr 5 an seiner Innenseite 25 eine Ringstufe 32 aufweisen, in die der Stutzen 10 mit seinen Stutzensegmenten 13 axial eingreift. Der Innenquerschnitt der Ringstufe 32 ist auf den Außenquerschnitt der Stutzensegmente 13 so abgestimmt, dass sich beim Aufstecken des Rohrs 5 auf den Stutzen 10 eine Zentrierung zwischen Stutzen 10 und Rohr 5 einstellt.

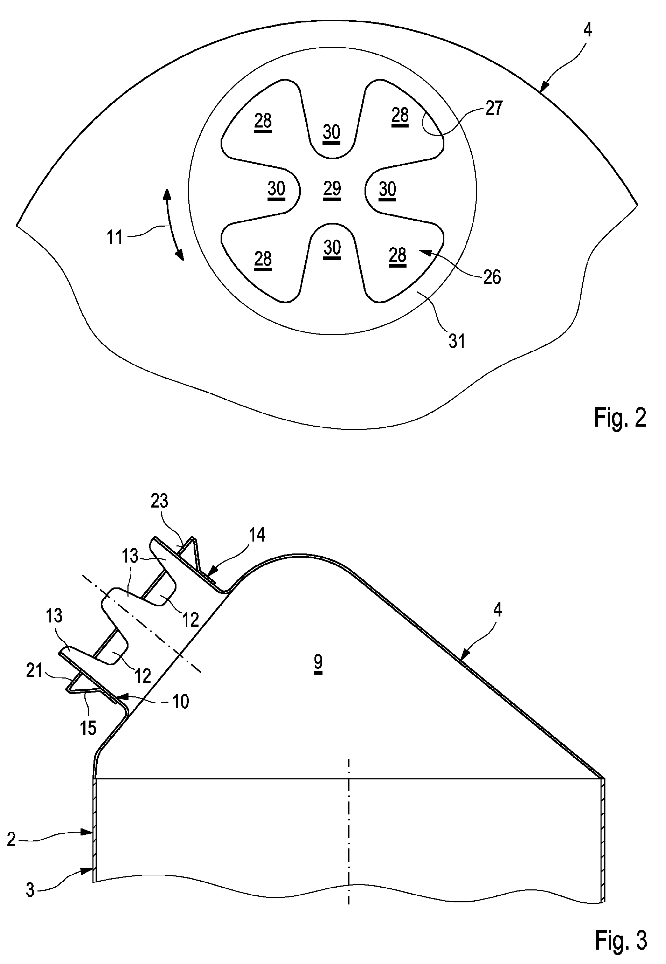

Ein Verfahren zum Herstellen der vorstehend beschriebenen Anordnung 6 kann wie folgt ablaufen:
Zunächst wird gemäß Figur 2 im Trichter 4 eine Öffnung 26 hergestellt, beispielsweise mittels eines Stanz- oder Schneidvorgangs. Die Öffnung 26 besitzt einen Öffnungsquerschnitt 27, der sternförmig gestaltet ist und wenigstens zwei Strahlen 28 aufweist. In Figur 2 ist eine vierstrahlige Konfiguration gezeigt, bei welcher der sternförmige Querschnitt 27 somit vier Strahlen 28 besitzt, die von einem gemeinsamen Zentrum 29 ausgehen. Vorzugsweise ist der Querschnitt 27 der Öffnung 26 so geformt, dass im Bereich der Öffnung 26 verbleibende Trichterabschnitte 30, die in der Umfangsrichtung 11 jeweils zwischen zwei benachbarten Strahlen 28 angeordnet sind, im Zentrum 29 der Öffnung 26 freistehend angeordnet sind, sich also nicht berühren.

Anschließend kann der Stutzen 10 gemäß Figur 3 durch Umformung des Trichters 4 im Bereich der Öffnung 26 hergestellt werden. Diese Umformung erfolgt durch ein sogenanntes Durchstellen, bei dem ein die Öffnung 26 aufweisender Bereich 31 des Trichters 4 mechanisch umgeformt und dabei nach außen gedrückt wird. Die zuvor genannten Trichterabschnitte 30, die in die Öffnung 26 hineinragen, bilden dann die Stutzensegmente 13. Die Strahlen 28 bilden dann die axial offenen Aussparungen 12. Anschließend kann gemäß Figur 3 die Verbindungshülse 14 auf den Stutzen 10 aufgesteckt werden. Optional kann die Verbindungshülse 14 dann mit dem Stutzen 10 verschweißt werden.

Nach dem Aufstecken der Verbindungshülse 14 kann dann das Rohr 5 gemäß Figur 1 aufgesteckt werden, wobei es durch die axial in das Rohr 5 eintauchenden Stutzensegmente 13 zentriert wird, und mit Hilfe der Schelle 18 und mittels der Verbindungshülse 14 am Trichter 4 festgelegt werden.

Wie sich Figur 2 entnehmen lässt, kann die Öffnung 26 zweckmäßig so geformt sein, dass sich die einzelnen Strahlen 28 von außen nach innen verjüngen. Somit nimmt ihre Öffnungsweite zum Zentrum 29 hin ab. Wie erwähnt sind im Beispiel der Figur 2 genau vier Strahlen 28 vorgesehen. In Verbindung mit den sich nach innen verjüngenden Querschnitten der Strahlen 28 erhält die Öffnung 26 so eine Kleeblattform.

## Patentansprüche

1. Anordnung eines Rohrs (5) an einem Trichter (4),
- bei der ein Rohrinnenraum (8) fluidisch mit einem Trichterinnenraum (9) verbunden ist,
- bei der das Rohr (5) mittels einer Schellenverbindung (7) am Trichter (4) befestigt ist,
- wobei am Trichter (4) ein Stutzen (10) integral ausgeformt ist, der in der Umfangsrichtung (11) mindestens zwei separate, axial offene Aussparungen (12) aufweist,
- wobei eine Verbindungshülse (14) außen auf den Stutzen (10) aufgesteckt ist, die einen sich zum Trichter (4) hin verjüngenden, integral an der Verbindungshülse (14) ausgeformten Spannkragen (15) aufweist,
- wobei das Rohr (5) mit einem dem Trichter (4) zugewandten Endabschnitt (16) auf den Stutzen (10) aufgesteckt ist,
- wobei der Endabschnitt (16) einen integral daran ausgeformten, sich vom Trichter (4) weg verjüngenden Gegenspannkragen (17) aufweist,
- wobei die Schellenverbindung (7) eine Schelle (18) aufweist, die einen ringförmigen Verbindungskörper (19) besitzt, der den Spannkragen (15) und den Gegenspannkragen (17) übergreift und axial aufeinander zu vorspannt.

2. Anordnung nach Anspruch 1,
**dadurch gekennzeichnet,**
**dass** der Spannkragen (15) indirekt über eine Dichtung oder direkt am Gegenspannkragen (17) anliegt.

3. Anordnung nach Anspruch 1 oder 2,
**dadurch gekennzeichnet,**
- **dass** der Spannkragen (15) an seiner dem Rohr (5) zugewandten Seite eine axiale Abstützfläche (21) aufweist,
- **dass** der Gegenspannkragen (17) an einem dem Trichter (4) zugewandten Ende eine axiale Anschlagfläche (22) aufweist, an der sich die Abstützfläche (21) abstützt.

4. Anordnung nach Anspruch 3,
**dadurch gekennzeichnet,**
**dass** der Endabschnitt (16) des Rohrs (5) zumindest in einem den Gegenspannkragen (17) und die Anschlagfläche (22) aufweisenden Bereich (24) als Gussteil oder Drehteil ausgestaltet ist.

5. Anordnung nach einem der Ansprüche 1 bis 4,
**dadurch gekennzeichnet,**
**dass** die Verbindungshülse (14) in der Umfangsrichtung (11) genau eine Unterbrechung aufweist.

6. Anordnung nach einem der Ansprüche 1 bis 5,
**dadurch gekennzeichnet,**
**dass** die Verbindungshülse (14) mit dem Stutzen (10) verschweißt ist.

7. Anordnung nach einem der Ansprüche 1 bis 6,
**dadurch gekennzeichnet,**
**dass** durch die Aussparungen (12) an dem Stutzen (10) Stutzensegmente (13) gebildet sind, deren Erstreckung in Umfangrichtung (11) sich vom Trichter (4) weg verringert.

8. Anordnung nach einem der Ansprüche 1 bis 7,
**dadurch gekennzeichnet,**
**dass** der Stutzen (10) durch Umformung des Trichters (4) integral am Trichter (4) ausgeformt ist.

9. Anordnung nach einem der Ansprüche 1 bis 8,
**dadurch gekennzeichnet,**
**dass** die Anordnung durch ein Verfahren nach Anspruch 10 hergestellt ist.

10. Verfahren zum Herstellen einer Anordnung (6) nach einem der Ansprüche 1 bis 9,
- bei dem in einem Trichter (4) eine Öffnung (26) hergestellt wird, die einen wenigstens zweistrahligen, sternförmigen Querschnitt (27) aufweist,
- bei dem der Trichter (4) im Bereich (31) dieser Öffnung (26) so durchgestellt wird, dass ein Stutzen (10) entsteht, der in der Umfangsrichtung (11) wenigstens zwei axial offene Aussparungen (12) aufweist, die jeweils durch einen Strahl (28) des sternförmigen Querschnitts (27) gebildet sind,
- bei dem eine Verbindungshülse (14) auf den Stutzen (10) aufgesteckt wird, die einen sich zum Trichter (4) verjüngenden, integral an der Verbindungshülse (14) ausgebildeten Spannkragen (15) aufweist,
- bei dem ein Rohr (5) mit einem Endabschnitt (16) auf den Stutzen (10) aufgesteckt wird, der einen integral daran ausgebildeten, sich vom Trichter (4) weg verjüngenden Gegenspannkragen (17) aufweist,
- bei dem eine Schelle (18) montiert wird, die den Spannkragen (15) und den Gegenspannkragen (17) umgreift und axial aufeinander zu vorspannt.

11. Verfahren nach Anspruch 10,
**dadurch gekennzeichnet,**
**dass** die Öffnung (26) so geformt ist, dass sich die Strahlen (28) des Querschnitts (27) von außen nach innen verjüngen.

12. Verfahren nach Anspruch 10 oder 11,
**dadurch gekennzeichnet,**
**dass** der Querschnitt (27) der Öffnung (26) des Trichters (4) genau drei oder vier Strahlen (28) aufweist.

13. Verfahren nach den Ansprüchen 11 und 12,
**dadurch gekennzeichnet,**
**dass** der Querschnitt (27) der Öffnung (26) des Trichters (4) kleeblattförmig ist.

14. Abgasanlage für eine Brennkraftmaschine, insbesondere in einem Kraftfahrzeug, mit wenigstens einer Abgasnachbehandlungseinrichtung (2), deren Gehäuse (3) über einen Trichter (4) mit einem Rohr (5) verbunden ist, wobei diese Verbindung durch eine Anordnung (6) nach einem der Ansprüche 1 bis 9 gebildet ist.

## Claims

1. An arrangement of a pipe (5) on a funnel (4),
- in which a pipe interior (8) is fluid-connected to a funnel interior (9),
- in which the pipe (5) is fastened to the funnel (4) by means of a clamp connection (7),
- wherein a connector (10) is integrally formed on the funnel (4), said connector having at least two separate, axially open cut-outs (12) in the circumferential direction (11),
- wherein a connecting sleeve (14) is placed onto the outside of the connector (10), said connecting sleeve having a clamping collar (15), which tapers towards the funnel (4) and is integrally formed on the connecting sleeve (14),
- wherein the pipe (5) is placed onto the connector (10) with an end section (16) that faces the funnel (4),
- wherein the end section (16) has a counter clamping collar (17), which is integrally formed thereon and tapers away from the funnel (4),
- wherein the clamp connection (7) has a clamp (18), which has an annular connecting body (19), which fits over the clamping collar (15) and the counter clamping collar (17) and prestresses them axially towards each other.

2. The arrangement according to Claim 1,
**characterised in that**
the clamping collar (15) bears against the counter clamping collar (17) directly or indirectly by means of a seal.

3. The arrangement according to Claim 1 or 2,
**characterised in that**
- the clamping collar (15) has on its side facing the pipe (5) an axial supporting face (21),
- the counter clamping collar (17) has on an end facing the funnel (4) an axial stop face (22), on which the supporting face (21) is supported.

4. The arrangement according to Claim 3,
**characterised in that**
the end section (16) of the pipe (5) is formed as a cast or turned part at least in a region (24) having the counter clamping collar (17) and the stop face (22).

5. The arrangement according to any one of Claims 1 to 4,
**characterised in that**
the connecting sleeve (14) has exactly one interruption in the circumferential direction (11).

6. The arrangement according to any one of Claims 1 to 5,
**characterised in that**
the connecting sleeve (14) is welded to the connector (10).

7. The arrangement according to any one of Claims 1 to 6,
**characterised in that**
connector segments (13) are formed by the cut-outs (12) on the connector (10), the extent in the circumferential direction (11) of which segments decreases away from the funnel (4).

8. The arrangement according to any one of Claims 1 to 7,
**characterised in that**
the connector (10) is integrally formed on the funnel (4) by reshaping the funnel (4).

9. The arrangement according to any one of Claims 1 to 8,
**characterised in that**
the arrangement is produced by a method according to Claim 10.

10. A method for producing an arrangement (6) according to any one of Claims 1 to 9,
- in which an opening (26) is produced in a funnel (4), said opening having a star-shaped cross section (27) with at least two rays (28),
- in which the funnel (4) is put through in the region (31) of said opening (26) in such a manner that a connector (10) is produced that has at least two axially open cut-outs (12) in the circumferential direction (11), which are each formed by one ray (28) of the star-shaped cross section (27),
- in which a connecting sleeve (14) is placed onto the connector (10), said connecting sleeve having a clamping collar (15), which tapers towards the funnel (4) and is integrally formed on the connecting sleeve (14),
- in which a pipe (5) is placed onto the connector (10) with an end section (16) that has a counter clamping collar (17), which is formed integrally thereon and tapers away from the funnel (4),
- in which a clamp (18) is mounted, which encloses the clamping collar (15) and the counter clamping collar (17) and prestresses them axially towards each other.

11. The method according to Claim 10,
**characterised in that**
the opening (26) is shaped in such a manner that the rays (28) of the cross section (27) taper from the outside inwards.

12. The method according to Claim 10 or 11,
**characterised in that**
the cross section (27) of the opening (26) of the funnel (4) has exactly three or four rays (28).

13. The method according to Claims 11 and 12,
**characterised in that**
the cross section (27) of the opening (26) of the funnel (4) is clover-leaf-shaped.

14. An exhaust system for an internal combustion engine, in particular in a motor vehicle, having at least one exhaust gas treatment device (2), the housing (3) of which is connected to a pipe (5) by means of a funnel (4), wherein this connection is formed by an arrangement (6) according to any one of Claims 1 to 9.

## Revendications

1. Agencement d'un tuyau (5) au niveau d'une trémie (4),
- où un espace intérieur de tuyau (8) est relié de manière fluidique à un espace intérieur de trémie (9),
- où le tuyau (5) est fixé au niveau de la trémie (4) au moyen d'un système d'assemblage à collier (7),
- dans lequel une tubulure (10) est formée intégralement au niveau de la trémie (4), laquelle tubulure présente, dans la direction périphérique (11), au moins deux évidements (12) séparés, axialement ouverts,
- dans lequel une douille d'assemblage (14) est enfichée côté extérieur sur la tubulure (10), laquelle douille d'assemblage présente une collerette de serrage (15) se rétrécissant en direction de la trémie (4), formée intégralement au niveau de la douille d'assemblage (14),
- dans lequel le tuyau (5) est enfiché, par un tronçon d'extrémité (16) tourné vers la trémie (4), sur la tubulure (10),
- dans lequel le tronçon d'extrémité (16) présente une collerette de serrage complémentaire (17) formée intégralement au niveau dudit tronçon d'extrémité, se rétrécissant en s'éloignant de la trémie (4),
- dans lequel le système d'assemblage à collier (7) présente un collier (18), qui possède un corps d'assemblage (19) présentant une forme annulaire, qui recouvre la collerette de serrage (15) et la collerette de serrage complémentaire (17) et qui les précontraint l'une vers l'autre axialement.

2. Agencement selon la revendication 1,
**caractérisé en ce**
**que** la collerette de serrage (15) repose indirectement au-dessus d'un joint d'étanchéité ou directement au niveau de la collerette de serrage complémentaire (17).

3. Agencement selon la revendication 1 ou 2,
**caractérisé en ce**
- **que** la collerette de serrage (15) présente, au niveau de son côté tourné vers le tuyau (5), une surface d'appui (21) axiale,
- **que** la collerette de serrage complémentaire (17) présente, au niveau d'une extrémité tournée vers la trémie (4), une surface de butée (22) axiale, au niveau de laquelle la surface d'appui (21) prend appui.

4. Agencement selon la revendication 3,
**caractérisé en ce**
**que** le tronçon d'extrémité (16) du tuyau (5) est configuré sous la forme d'une pièce moulée en fonte ou d'une pièce rotative au moins dans une zone (24) présentant la collerette de serrage complémentaire (17) et la surface de butée (22).

5. Agencement selon l'une quelconque des revendications 1 à 4,
**caractérisé en ce**
**que** la douille d'assemblage (14) présente dans la direction périphérique (11) précisément une interruption.

6. Agencement selon l'une quelconque des revendications 1 à 5,
**caractérisé en ce**
**que** la douille d'assemblage (14) est soudée à la tubulure (10).

7. Agencement selon l'une quelconque des revendications 1 à 6,
**caractérisé en ce**
**que** sont formés par les évidements (12) au niveau de la tubulure (10) des segments de tubulures (13), dont l'extension diminue dans la direction périphérique (11) en s'éloignant de la trémie (4).

8. Agencement selon l'une quelconque des revendications 1 à 7,
**caractérisé en ce**
**que** la tubulure (10) est intégralement formée au niveau de la trémie (4) par déformation de la trémie (4).

9. Agencement selon l'une quelconque des revendications 1 à 8,
**caractérisé en ce**
**que** l'agencement est produit par un procédé selon la revendication 10.

10. Procédé servant à produire un agencement (6) selon l'une quelconque des revendications 1 à 9,
- où une ouverture (26) est produite dans une trémie (4), laquelle ouverture présente une section transversale (27) au moins à deux faisceaux, en forme d'étoile,
- où la trémie (4) est placée au travers dans la zone (31) de ladite ouverture (26) de manière à former une tubulure (10), qui présente, dans la direction périphérique (11), au moins deux évidements (12) axialement ouverts, qui sont formés respectivement par un faisceau (28) de la section transversale (27) présentant une forme d'étoile,
- où une douille d'assemblage (14) est enfichée sur la tubulure (10), laquelle douille d'assemblage présente une collerette de serrage (15) se rétrécissant en direction de la trémie (4), réalisée intégralement au niveau de la douille d'assemblage (14),
- où un tuyau (5) est enfiché, par un tronçon d'extrémité (16), sur la tubulure (10), qui présente une collerette de serrage complémentaire (17) intégralement réalisée au niveau de la tubulure, se rétrécissant en s'éloignant de la trémie (4),
- où un collier (18) est monté, lequel entoure la collerette de serrage (15) et la collerette de serrage complémentaire (17) et les précontraint l'une vers l'autre axialement.

11. Procédé selon la revendication 10,
**caractérisé en ce**
**que** l'ouverture (26) est formée de sorte que les faisceaux (28) de la section transversale (27) se rétrécissent de l'extérieur vers l'intérieur.

12. Procédé selon la revendication 10 ou 11,
**caractérisé en ce**
**que** la section transversale (27) de l'ouverture (26) de la trémie (4) présente précisément trois ou quatre faisceaux (28).

13. Procédé selon les revendications 11 et 12,
**caractérisé en ce**
**que** la section transversale (27) de l'ouverture (26) de la trémie (4) présente une forme de trèfle.

14. Système d'échappement pour un moteur à combustion interne, en particulier dans un véhicule automobile, comprenant au moins un système de traitement ultérieur de gaz d'échappement (2), dont le boîtier (3) est relié à un tuyau (5) par l'intermédiaire d'une trémie (4), dans lequel ledit assemblage est formé par un agencement (6) selon l'une quelconque des revendications 1 à 9.
